# EUROPEAN PATENT APPLICATION

(11) **EP 2 366 645 A2**
(43) Date of publication of application: **21.09.2011**
(21) Application number: 11154679.2
(22) Date of filing: 16.02.2011
(51) Int. Cl.: B65H 3/12

(54) **Flow channel opening and closing device and sheet handling apparatus**

(30) Priority: 16.03.2010 JP 2010059857
(71) Applicant: Kabushiki Kaisha Toshiba, Tokyo 105-8001 (JP)
(72) Inventor: Asari, Yukio, Minato-ku Tokyo 105-8001 (JP); Mitsuya, Yusuke, Minato-ku Tokyo 105-8001 (JP); Naruoka, Yoshihiko, Minato-ku Tokyo 105-8001 (JP); Todoriki, Toru, Minato-ku Tokyo 105-8001 (JP)
(74) Representative: Horn Kleimann Waitzhofer

(57) **Abstract**

According to one embodiment, a flow channel opening and closing device includes a first rotating plate (23) provided rotatably along a face which crosses two adjacent flow channels, having a first fluid passing hole (23a) which overlaps with each of the two flow channels midway during rotation, which fully opens the one flow channel and blocks the other flow channel at a region except the first fluid passing hole (23a) by making the first fluid passing hole (23a) overlap with the one flow channel, and a second rotating plate (24) provided adjacent to the first rotating plate (23) and rotatably along a face which crosses the two flow channels, having a second fluid passing hole (24a) which overlaps with each of the two flow channels midway during rotation, which rotates to a position where the second fluid passing hole (24a) overlaps at least partially with the one flow channel when the first rotating plate (23) rotates to a position where the first fluid passing hole (23a) fully opens the one flow channel. (FIG. 5)

## Description

### FIELD

Exemplary embodiments described herein relate to a flow channel opening and closing device which opens and closes a flow channel and at the same time controls a flow rate of flowing fluid, and a sheet handling apparatus provided with the flow channel opening and closing device.

### BACKGROUND

Conventionally, as a sheet handling apparatus, a postal matter takeout apparatus is known, which makes a perforated belt run along a postal matter, makes the postal matter to be adsorbed at the surface of the belt by adsorbing the belt holes by a suction nozzle arranged at the back side of the belt, and takes out the postal matter one by one (U.S. Patent No. 5,391,051, for example). The apparatus is provided with a solenoid valve between the suction nozzle and a vacuum tank.

And, at the time of taking out a postal matter, the belt is run, the solenoid valve is opened, and thereby the postal matter is made to be adsorbed to the belt by the suction nozzle. At the time of taking out postal matters continuously, the solenoid valve is opened and closed in time with takeout timing of each postal matter, and thereby a gap is formed between a preceding postal matter and a postal matter to be taken out next.

But, even if the solenoid valve is closed and the suction by the suction nozzle is stopped, negative pressure acting on the postal matter can not be rapidly eliminated in the state in which the postal matter is adsorbed to the belt. For the reason, even if opening and closing period of the solenoid valve is made short by running the belt at high speed so as to take out the postal matter at high speed, as the negative pressure actually acting on the postal matter can not be eliminated instantaneously, the postal matters can not be taken out at high speed in the state in which a gap is provided between the postal matters. In addition, if the negative pressure can not be eliminated instantaneously, double feeding that two postal matters are taken out in the overlapping state may occur easily.

In a conventional flow channel opening and closing device, a solenoid valve is used.

The solenoid valve generally has a coil so as to move an approximately cylindrical plunger in the axis direction, an approximately cylindrical chamber to house the plunger, and two holes provided at the bottom of the chamber, to which two ductworks are connected. In case that the solenoid valve is used in the apparatus disclosed in the above-described U.S. Patent No. 5,391,051, each of the two ductworks is connected to a suction nozzle and a vacuum tank.

In the case of opening the solenoid valve, the coil is energized and thereby the plunger is drawn out from the chamber, and the two holes are made to communicate with each other via the chamber. Conversely, at the time of closing the solenoid valve, the energization of the coil is stopped, and thereby the plunger is pressed into the chamber, and the bottom of the plunger is made to adhere tightly to the bottom of the chamber. Thereby, the two holes are closed up and a flow channel connecting the two ductworks is blocked.

However, as the solenoid valve of this type is opened and closed by making the plunger move in the axial direction, has large inertia. In particular, in case that the diameters of the ductworks connected to the solenoid valve are made large so as to increase the flow rates of the air, the plunger which closes up the two holes is also required to have a large diameter, and thereby the inertial becomes large by just that much.

In addition, when the solenoid valve is opened, a time is required after energizing the coil to move the plunger till air flows into the chamber and a pressure in the chamber reaches a definite pressure, and thereby a response speed is slow till the air circulation is started after energizing. In addition, when the solenoid valve is closed, as the air having a definite pressure is pressed into the chamber and thereby the plunger is pressed into the chamber, the traveling speed of the plunger is slow. That is, in the conventional solenoid valve, response speed is slow at the time of energizing the coil and stopping energization.

Consequently, if the solenoid valve is used between the suction nozzle and the vacuum tank as in the postal matter takeout apparatus which is disclosed in U.S. Patent No. 5,391,051, postal matters can not be taken out at high speed by the problem for eliminating the negative pressure, and in addition, the takeout speed becomes slower caused by that the response speed of the solenoid valve itself is slow.

In addition, if the solenoid valve is used in the postal matter takeout apparatus which is disclosed in U.S. Patent No. 5,391,051, to make a heavy postal matter with a relatively large size to be adsorbed to the perforated belt becomes difficult. That is, with respect to the solenoid valve, to circulate air through a flow channel which is bent by a plurality of times is required in the opened state from the structural problem, and accordingly making the flow rate large is difficult because of the large passing resistance. For this reason, suctioning a relatively large amount of air via the suction nozzle is difficult, and thereby adsorbing a heavy postal matter becomes difficult.

In recent years, in a postal matter takeout apparatus of this kind, requests are increasing to take out postal matters at high speed continuously in the state in which postal matters with a larger size than A4 size are mixed with postal matters with a regular size. In the case of taking out relatively heavy postal matters with a large size like this, to increase adsorption force at the time of making the postal matter to be adsorbed to the belt is required.

Even if the amount of air to be suctioned by the suction nozzle can be made large in accordance with postal matters with a large size by eliminating the above-described problem of the passing resistance, in the case of taking out thin and light postal matters with a relatively small size such as a postcard, double feeding that two postal matters are taken out in the overlapping state may easily occur.

Consequently, the amount of the suctioned air is to be controlled ordinarily so that the adsorption force becomes a minimum adsorption force which can be adsorb a postal matter with a maximum size which is to be handled in the relevant postal matter takeout apparatus, but though the double feeding can be reduced, possibility that postal matters with the maximum size can not be taken out may become high.

That is, in the case of handling postal matters with different sizes and weights in the mixed state, a method in which the adsorption force by the belt is maintained constant has limitations. For the reason, methods are desired in which the adsorption force by the belt is changed in accordance with the size of the postal matter to be adsorbed.

But, in case that the suction amount of air by the suction nozzle is to be changed so as to change the adsorption force by the belt, to change the suction amount at high speed for each postal matter is extremely difficult, so that the method can not deal with the high speed takeout.

### SUMMARY OF THE INVENTION (EPO, CHN, KOR, PHI)

An object of the present invention is to provide a flow channel opening and closing device which can open and close a flow channel at high speed and can rapidly control a flow rate of fluid to a desired amount when the flow channel is opened, and a sheet handling apparatus using the flow channel opening and closing device.

### BRIEF DESCRIPTION OF THE DRAWINGS

FIG. 1 is a schematic plan view of a sheet takeout apparatus seen from above according to an embodiment of the invention;

FIG. 2 is a block diagram of a control system to control an operation of the takeout apparatus of FIG. 1;

FIG. 3 is a partly enlarged view showing a takeout belt built in the takeout apparatus of FIG. 1 partly;

FIG. 4 is a schematic view showing a connecting state of a flow channel opening and closing device built in the takeout apparatus of FIG. 1;

FIG. 5 is a perspective view to describe an internal structure of the flow channel opening and closing device of FIG. 4;

FIG. 6 is a block diagram of a control system to control an operation of the flow channel opening and closing device of FIG. 4;

FIG. 7 is a schematic view showing positions of fluid passing holes of two rotating plates when a flow channel of an induction pipe is fully opened by the flow channel opening and closing device of FIG. 4;

FIG. 8 is a schematic view showing the positions of the fluid passing holes of the two rotating plates when a flow channel of an eduction pipe is fully opened by the flow channel opening and closing device of FIG. 4;

FIG. 9 is a schematic view to describe behavior of the two rotating plates at the time of half opening the flow channel of the eduction pipe from a state in which the flow channel of the induction pipe is fully opened by the flow channel opening and closing device of FIG. 4;

FIG. 10 is a schematic view to describe behavior of the two rotating plates at the time of half opening the flow channel of the induction pipe from a state in which the flow channel of the eduction pipe is fully opened by the flow channel opening and closing device of FIG. 4;

FIG. 11 is a graph showing temporal change of angular speeds at the time of rotating the two rotating plates as described in FIG. 9 and FIG. 10;

FIG. 12 is a graph showing temporal change of angular speeds at the time of rotating the two rotating plates as described in FIG. 9 and FIG. 10;

FIG. 13 is a graph showing temporal change of angular speeds at the time of rotating the two rotating plates as described in FIG. 9 and FIG. 10;

FIG. 14 is a schematic view to describe behavior of the two rotating plates at the time of half opening the flow channel of the eduction pipe from a state in which the flow channel of the induction pipe is fully opened by the flow channel opening and closing device of FIG. 4;

FIG. 15 is a schematic view to describe behavior of the two rotating plates at the time of half opening the flow channel of the induction pipe from a state in which the flow channel of the eduction pipe is fully opened by the flow channel opening and closing device of FIG. 4;

FIG. 16 is a graph showing temporal change of angular speeds at the time of rotating the two rotating plates as described in FIG. 14 and FIG. 15;

FIG. 17 is a graph showing temporal change of angular speeds at the time of rotating the two rotating plates as described in FIG. 14 and FIG. 15;

FIG. 18 is a graph showing temporal change of angular speeds at the time of rotating the two rotating plates as described in FIG. 14 and FIG. 15;

FIG. 19 is a schematic view to describe behavior of the two rotating plates at the time of fully opening the flow channel of the induction pipe from a state in which the flow channel of the eduction pipe is half opened by the flow channel opening and closing device of FIG. 4;

FIG. 20 is a schematic view to describe behavior of the two rotating plates at the time of fully opening the flow channel of the induction pipe from a state in which the flow channel of the eduction pipe is half opened by the flow channel opening and closing device of FIG. 4;

FIG. 21 is a schematic view to describe behavior of the two rotating plates at the time of fully opening the flow channel of the eduction pipe from a state in which the flow channel of the induction pipe is half opened by the flow channel opening and closing device of FIG. 4;

FIG. 22 is a schematic view to describe behavior of the two rotating plates at the time of fully opening the flow channel of the eduction pipe from a state in which the flow channel of the induction pipe is half opened by the flow channel opening and closing device of FIG. 4;

FIG. 23 is a schematic view to describe behavior of the two rotating plates at the time of fully opening the flow channel of the induction pipe from a state in which the flow channel of the eduction pipe is half opened by the flow channel opening and closing device of FIG. 4;

FIG. 24 is a schematic view to describe behavior of the two rotating plates at the time of fully opening the flow channel of the induction pipe from a state in which the flow channel of the eduction pipe is half opened by the flow channel opening and closing device of FIG. 4;

FIG. 25 is a schematic view to describe behavior of the two rotating plates at the time of fully opening the flow channel of the eduction pipe from a state in which the flow channel of the induction pipe is half opened by the flow channel opening and closing device of FIG. 4; and

FIG. 26 is a schematic view to describe behavior of the two rotating plates at the time of fully opening the flow channel of the eduction pipe from a state in which the flow channel of the induction pipe is half opened by the flow channel opening and closing device of FIG. 4.

### DETAILED DESCRIPTION

In general, according to one embodiment, there is provided a flow channel opening and closing device comprising: a first rotating plate provided rotatably along a face which crosses two adjacent flow channels, having a first fluid passing hole which overlaps with each of the two flow channels midway during rotation, which fully opens the one flow channel and blocks the other flow channel at a region except the first fluid passing hole by making the first fluid passing hole overlap with the one flow channel; and a second rotating plate provided adjacent to the first rotating plate and rotatably along a face which crosses the two flow channels, having a second fluid passing hole which overlaps with each of the two flow channels midway during rotation, which rotates to a position where the second fluid passing hole overlaps at least partially with the one flow channel when the first rotating plate rotates to a position where the first fluid passing hole fully opens the one flow channel.

Hereinafter, embodiments of the invention will be described with reference to the drawings.

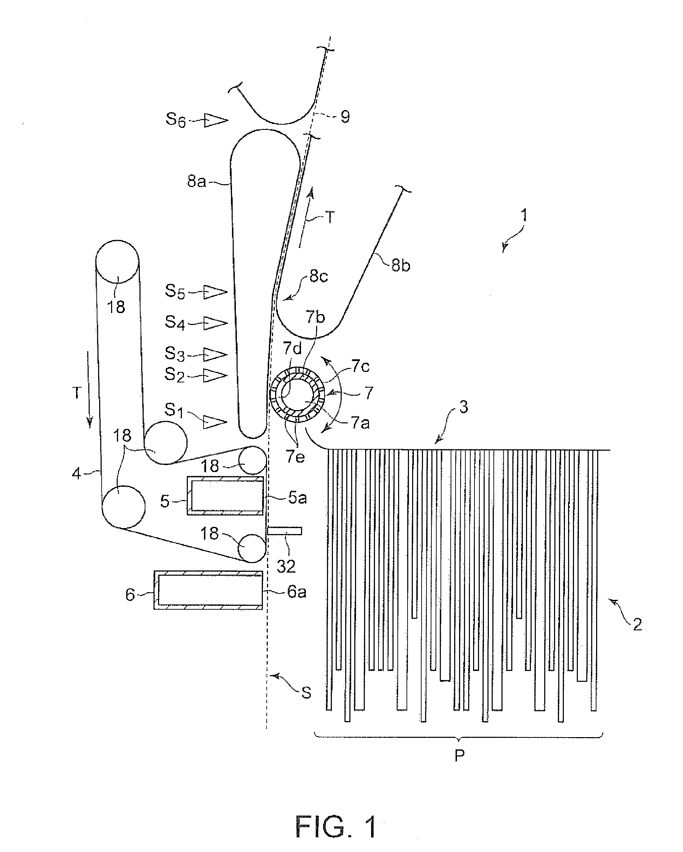

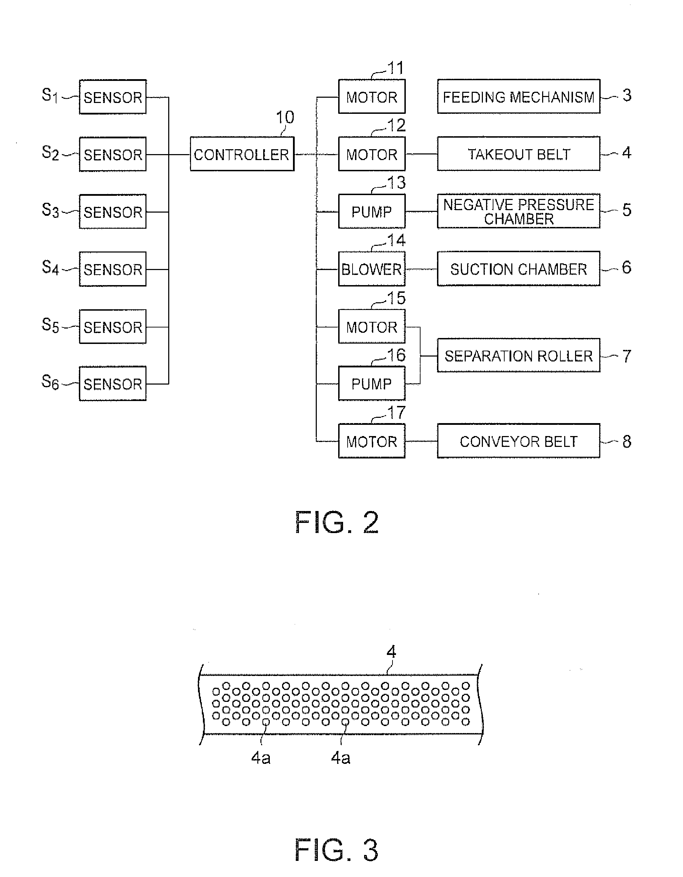

FIG. 1 shows a schematic plan view of a postal matter takeout apparatus 1 (hereinafter, referred to as a takeout apparatus 1) which is seen from above as a sheet handling apparatus of a first embodiment of the invention. In addition, FIG. 2 shows a block diagram of a control system to control an operation of the takeout apparatus 1. The takeout apparatus 1 is an apparatus to handle a plurality kinds of postal matters P which are different in size and weight in mixed state, as sheets which are objects to be handled, for example.

The takeout apparatus 1 has an insert portion 2, a feeding mechanism 3, a takeout belt 4 (takeout member), a negative pressure chamber 5 (negative pressure generating portion), a suction chamber 6, a separation roller 7, conveyor belts 8a, 8b (hereinafter, there may be cases in which they are referred to generically as conveyor belts 8), a plurality of sensors S1 ∼ S6, and a controller 10 to control an operation of the whole apparatus.

A plurality of the sensors S1 ∼ S6, a motor 11 to make a floor belt and a backup plate (not shown) of the feeding mechanism 3 operate, a motor 12 to make the takeout belt 4 run in the direction of an arrow T, a pump 13 (air-intake device) to be evacuated the negative pressure chamber 5, a blower 14 to suction the suction chamber 6, a motor 15 to give separation torque to the separation roller 7, a pump 16 so as to make negative pressure generate at the circumference face of the separation roller 7, and a motor 17 to make the conveyor belts 8 run, are connected to the controller 10.

A plurality of postal matters P are inserted into the insert portion 2 in the stacked state and in the upright position. The postal matters P inserted in the insert portion 2 are moved to one end side in the stacking direction (left side in FIG. 1) by the feeding mechanism 3, and the postal matter P at the one end (left end in FIG. 1) in the stacking direction is fed to a takeout position S. Each time the postal matter P which is fed to the takeout position S is taken out, the feeding mechanism 3 operates to constantly feed the postal matter P which is present at the one end in the stacking direction to the takeout position S.

The takeout belt 4 is wound around a plurality of pulleys 18 and thereby is belted in the endless state. A portion of the takeout belt 4 makes contact with the postal matter P which is fed to the takeout position S, and the takeout belt 4 runs in the face direction of the relevant postal matter P, that is in the takeout direction (in the direction of an arrow T in FIG. 1) at a constant speed. The negative pressure chamber 5 is arranged at the inside of the takeout belt 4 and at a position to face the takeout position S across the takeout belt 4.

A plurality of adsorption holes 4a are formed in the takeout belt 4, as shown in FIG. 3. On the other hand, the negative pressure chamber 5 has an opening 5a to face the back face of the takeout belt 4. And, when the takeout belt 4 is run and the negative pressure chamber 5 is evacuated, the negative pressure chamber 5 is depressurized and thereby a negative pressure acts on the postal matter P at the takeout position S via the opening 5a of the negative pressure chamber 5 and the adsorption holes 4a of the takeout belt 4, and as a result, the relevant postal matter P is adsorbed to the surface of the takeout belt 4. The postal matter P which is adsorbed to the takeout belt 4 is taken out from the takeout position S in the direction of the arrow T with the running of the belt 4.

The postal matter P which is taken out from the takeout position S is conveyed upward in FIG. 1 via a conveyor route 9, and is transferred to the conveyor belts 8. A plurality of the sensors S1 ∼ S6 which are provided along the conveyor route 9 are each a transmission type optical sensor (one side, not shown), which detects that the postal matter P blocks an optical path of the sensor (sensor output; dark) and in addition detects that the postal matter P is not present on the optical path (sensor output; bright). That is, each of these sensors S1 ∼ S6 detects passing of a tip end and a back end of the postal matter P in the conveying direction.

The suction chamber 6 is arranged along the takeout direction of the postal matter P at the upstream side (lower side in the figure) of the takeout belt 4 so as to make an opening 6a face the takeout position S. And, when the blower 14 is operated, air is suctioned from the opening 6a of the suction chamber 6, and thereby airflow is generated at the takeout position S. The airflow functions to rapidly suction the postal matter P at the one end in the stacking direction out of a plurality of the postal matters p which are inserted into the insert portion 2 to the takeout position S.

The separation roller 7 is arranged at the downstream side of the takeout position S in the takeout direction and at the opposite side of the takeout belt 4 across the conveyor route 9. The separation roller 7 has an approximately cylindrical core 7b having a chamber 7a at the inside, and an approximately cylindrical sleeve 7c which are rotatably provided at the outer circumference of the core 7b. The core 7b is fixedly attached so that an opening 7d faces toward the conveyor route 9. The sleeve 7c has a plurality of adsorption holes 7e. And, when the pump 16 is operated to evacuate the chamber 7a of the core 7b, the chamber 7a is depressurized, and a negative pressure is generated at the circumference face of the separation roller 7 via a plurality of the adsorption holes 7e of the sleeve 7c which rotates along the outer circumference of the core 7b.

That is, the motor 15 gives a separation torque to the sleeve 7c in the reverse direction of the take out direction T, and the pump 16 generates a negative pressure at the outer circumference face of the sleeve 7c, and thereby second and later postal matters P which are led out along with the postal matter P which is taken out from the takeout position S can be separated.

In addition, the conveyor belt 8a of the endless shape is wound around at a side (left side in the figure) which faces the separation roller 7 across the conveyor route 9. On the other hand, the conveyor belt 8b of endless shape is wound around also at a side which faces the conveyor belt 8a across the conveyor route 9. That is, the conveyor route 9 at the downstream side of the separation roller 7 is defined between the two conveyor belts 8a, 8b. And the tip end in the takeout position of the postal matter P which is taken out from the takeout position S by the takeout belt 4 is nipped at a nip 8c of the conveyor belts 8a, 8b, and the postal matter P is transferred to the conveyor belts 8a, 8b and is conveyed to the downstream side.

Here, an operation to take out a plurality of postal matters P which are inserted via the insert portion 2 one by one on the conveyor route 9. When a plurality of the postal matters P are inserted into the takeout apparatus 1 via the insert portion 2, the postal matters P are fed to the takeout position S by the feeding mechanism 3 in series, the postal matter P is adsorbed by the takeout belt 4 and is taken out on the conveyor route 9. The postal matter P which is conveyed via the conveyor route 9 is monitored by the controller 10 with respect to the conveying position and conveying state via a plurality of the sensors S1 ∼ S6.

At the time of taking out the postal matter P, the negative pressure chamber 5 is evacuated by the pump 13 and the pressure in the negative pressure chamber 5 is depressurized, and thereby the negative pressure is generated at the surface of the takeout belt 4 by the depressurized pressure. In addition, airflow toward the takeout position S constantly operates by the suction chamber 6 to the postal matter P at the one end in the stacking direction out of the postal matters P which are inserted in the insert portion 2. That is, the postal matter P at the one end in the stacking direction is rapidly pulled to the takeout position S by the suction chamber 6, and is adsorbed and taken out by the takeout belt 4.

The postal matter P which is taken out from the takeout position S runs into the nip 8c of the conveyor belts 8a, 8b, and the tip in the takeout direction is nipped at the nip 8c, and the postal matter P is further conveyed to the downstream side. That the taken out postal matter P reaches the nip 8c is detected by that the output of the sensor S5 turns from bright to dark. In this time, running speeds of the conveying belts 8a, 8b are set slightly faster than a running speed of the takeout belt 4, and thereby the relevant postal matter P comes to be pulled out by the conveyor belts 8a, 8b and conveyed.

In case that second and later postal matters P are led out in the overlapping state along with the postal matter P which is taken out from the takeout position S, the second and later postal matters P are separated by the separation roller 7. In this time, the negative pressure is generated at the circumference face of the separation roller 7, and the separation torque in the direction reverse to the taking out direction is given to the sleeve 7c. In case that the first postal matter P is normally taken out, the sleeve 7c of the separation roller 7 rotates with the first postal matter P along the taking out direction, and in case that the two postal matters P are taken out in the overlapping state, the sleeve 7c rotates reversely. Thereby, the second and later postal matters P are brought back in the reverse direction and separated from the first postal matter P.

Meanwhile, in case of taking out a plurality of postal matters P inserted in the state that the postal matters P are overlapped one by one on the conveyor route 9, as described above, gaps between the postal matters P are formed by ON/OFF controlling the negative pressure of the negative pressure chamber 5 or by making the takeout belt 4 run intermittently. The magnitudes of these gaps are determined according to the processing ability of the postal matters P in a processing unit (here, the diagrammatic representation and description thereof will be omitted.) which is connected to the conveyor route 9 at the downstream of the takeout apparatus 1. And/or, the magnitudes of these gaps are determined according to the switching speed of gates (not shown) arranged at the downstream of the conveyor route 9.

In order to increase processing efficiency in the processing unit at the downstream side and to give sufficient processing time, to control stably the gaps between the postal matters P to desired lengths is desired. But in the method to form gaps by operating intermittently the takeout belt 4, to control times required for accelerating and decelerating the belt with high precision is difficult, and thereby there is a possibility that slip may be generated between the belt and the postal matter P at the time of acceleration and deceleration.

On the other hand, in order to ON/OFF control the negative pressure of the negative pressure chamber 5, a method is thought of, which by providing the above-described conventional solenoid valve in the midway of the ductwork connecting the pump 13 and the negative pressure chamber 5, controls the gaps between postal matters by controlling to open and close the solenoid valve. But, according to this method, in addition to that the response speed of the solenoid valve itself is slow as described above, even if the suction by the pump is stopped by closing the solenoid valve, as the negative pressure remains in the negative pressure chamber 5 for a while in the state that the postal matter P is adsorbed to the belt, a time is required till the pressure returns to the atmosphere pressure.

In addition, in the method to ON/FF control the negative pressure by opening and closing the solenoid valve, to take out a heavy postal matter P with a relatively large size at a desired timing is difficult. That is, to increase the flow rate of air flowing through the solenoid valve is difficult for the above-described problem of the passing resistance, and to generate adsorption force which is strong enough to adsorb the heavy postal matter P is difficult. Even if the adsorption force of the postal matter P for the takeout belt 4 is made large by increasing the capacity of the pump 13 to suction the negative pressure chamber 5, to switch at high speed the suction amount of the air by the pump 13 in accordance with the weight of the postal matter P is difficult, and to take out all the postal matters P with different weights at high speed and at the same timing is extremely difficult.

Consequently, to control a gap between a back end of the preceding postal matter P and a tip end of the following postal matter P to a desired length is difficult in any method, and therefore development of a takeout apparatus has been expected which can continuously and surely take out a plurality of postal matters P at the desired timing and at high speed in the desired gaps, regardless of the sizes and weights of the postal matters P.

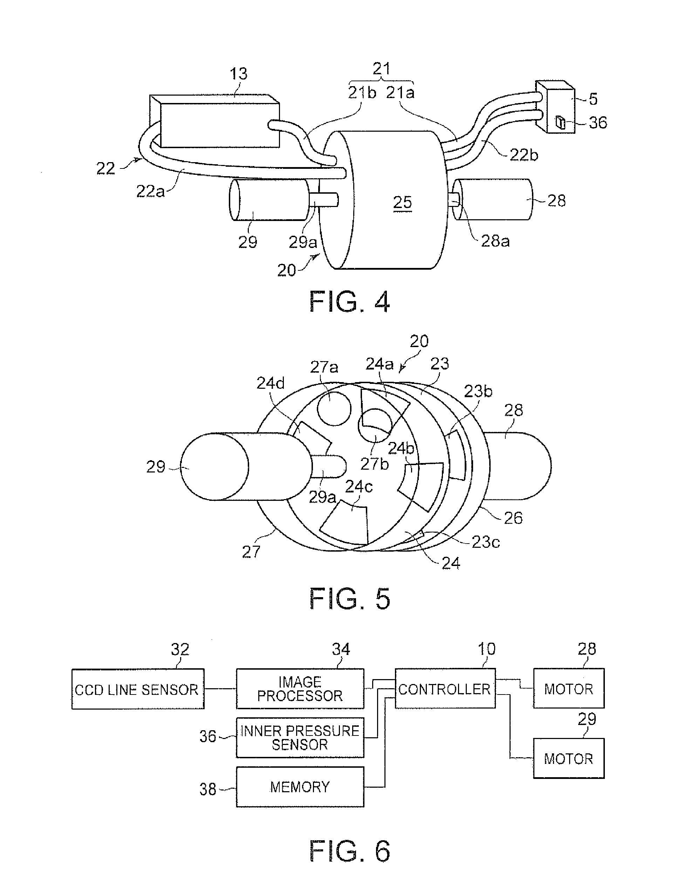

For this problem, the inventors of the present application have solved the above-described problem by providing a flow channel opening and closing device 20 according to an embodiment of the present invention midway between an induction pipe 21 and an eduction pipe 22 each of which connects the negative pressure chamber 5 and the pump 13, as shown in a schematic view of FIG. 4. That is, to handle a plurality of postal matters with different weights at high speed in mixed state has become possible by using the flow channel opening and closing device 20 which will be described later

Hereinafter, a structure of the flow channel opening and closing device 20 will be described in detail with reference to FIG. 4 to FIG. 6. FIG. 4 shows a schematic view of the flow channel opening and closing device 20 which is assembled in the takeout apparatus 1, FIG. 5 shows a schematic perspective view of an internal structure of the flow channel opening and closing device 20, and FIG. 6 shows a block diagram of a control system to control an operation of the flow channel opening and closing device 20. In addition, the operation of the flow channel opening and closing device 20 is controlled by the above-described controller 10 of the takeout apparatus 1.

The flow channel opening and closing device 20 is fit in midway between the induction pipe 21 and the eduction pipe 22 each of which connects the negative pressure chamber 5 and the pump 13 as shown in FIG. 4. The induction pipe 21 defines a flow channel so as to make the air in the negative pressure chamber 5 circulate toward the pump 21 by the suction operation of the pump 13. The eduction pipe 22 defines a flow channel to feed the exhaust air from the pump 13 into the negative pressure chamber 5.

In other words, the induction pipe 21 is divided into a ductwork 21a at the upstream side seen from the flow channel opening and closing device 20 and a ductwork 21b at the downstream side seen from the flow channel opening and closing device 20 along the air circulation direction. In addition, the eduction pipe 22 is also divided into a ductwork 22a at the upstream side seen from the flow channel opening and closing device 20 and a ductwork 22b at the downstream side seen from the flow channel opening and closing device 20 along the air circulation direction. And a flow channel connecting the divided induction pipes 21a, 21b, and a flow channel connecting the divided eduction pipes 22a, 22b pass in the flow channel opening and closing device 20. In addition, the flow channel opening and closing device 20 functions to selectively open and close these two flow channels.

The flow channel opening and closing device 20 has two circular rotating plates 23, 24 which are adjacently arranged in parallel and coaxially to each other. These two rotating plates 23, 24 are respectively provided to be rotatable along faces, each of which crosses a flow channel of the air (fluid) flowing through the induction pipe 21 and a flow channel of the air flowing through the eduction pipe 21.

In the present embodiment, the one rotating plate 23 has four approximately fan-shaped fluid passing holes 23a, 23b, 23c, 23d which are separately formed along the rotation direction at positions distant from the rotation center in the circumferential direction at even intervals. In addition, the other rotating plate 24 has four approximately fan-shaped fluid passing holes 24a, 24b, 24c, 24d which are separately formed along the rotation direction at positions distant from the rotation center in the circumferential direction at even intervals. In other words, a plurality of these fluid passing holes 23a, 23b, 23c, 23d, and 24a, 24b, 24c, 24d are arranged in the rotating plate 23, 24 at intervals of 90° with respect to the rotation angle of the rotating plate 23, 24, respectively.

Each of the four fluid passing holes 23a, 23b, 23c, 23d of the one rotating plate 23 functions as a first fluid passing hole of the invention which overlaps with the flow channel of the induction pipe 21 and also overlaps with the flow channel of the eduction pipe 22 midway in the rotation of the rotating plate 23. Each of the four fluid passing holes 24a, 24b, 24c, 24d of the other rotating plate 24 functions as a second fluid passing hole of the invention which overlaps with the flow channel of the induction pipe 21 and also overlaps with the flow channel of the eduction pipe 22 midway in the rotation of the rotating plate 24.

The two rotating plates 23, 24 are rotatably housed and arranged in a cylindrical case 25. In addition, at the outsides of the two rotating plates 23, 24 in the axial direction and at the insides of the case 25, two columnar chassis 26, 27 so as to compose portions of the flow channel of the induction pipe 21 and the flow channel of the eduction pipe 22 which are described above are fixedly arranged in the case 25, respectively. The chassis 26, 27 are thicker than the rotating plates 23, 24, and have approximately the same diameters as those of the rotating plates 23, 24, respectively.

These two chassis 26, 27 have air holes 26a, 27a composing a portion of the flow channel passing through the induction pipe 21 and air holes 26b, 27b composing a portion of the flow channel passing through the eduction pipe 22, respectively. In other words, the one ductwork 21a at the upstream side of the induction pipe 21 is connected to the one air hole 26a of the one chassis 26 and the ductwork 22b at the downstream side of the eduction pipe 22 is connected to the other air hole 26b of the one chassis 26. In addition, the ductwork 21b at the downstream side of the induction pipe 21 is connected to the one air hole 27a of the other chassis 27 and the ductwork 22a at the upstream side of the eduction pipe 22 is connected to the other air hole 27b of the other chassis 27. That is, the one air hole 26a of the one chassis 26 and the one air hole 27a of the other chassis 27 are coaxially arranged, and the other air hole 26b of the one chassis 26 and the other air hole 27b of the other chassis 27 are coaxially arranged.

In the present embodiment, the two air holes 26a, 26b which are formed in the one chassis 26 and the two air holes 27a, 27b which are formed in the other chassis 27 are provided in the circumference direction and adjacent to each other with a half pitch of the pitch (arrangement distance along the rotation direction) of the fluid passing holes 23a, 23b, 23c, 23d, and 24a, 24b, 24c, 24d of the above-described rotating plates 23, 24, respectively. Consequently, in the state in which the one fluid passing hole 23a of the rotating plate 23 is completely overlapped with the one air hole 26a of the chassis 26, the other air hole 26b of the chassis 26 is completely blocked at a region between the two fluid passing holes 23a, 23b of the rotating plate 23.

In addition, two motors 28, 29 are provided at the outsides of the case 25 in the axial direction.
The one motor 28 has a rotary shaft 28a extending so as to penetrate thorough the center of the one chassis 26, and the one rotating plate 23 is coaxially fit to the tip of the rotary shaft 28a. In addition, the other motor 29 has a rotary shaft 29a extending so as to penetrate thorough the center of the other chassis 27, and the other rotating plate 24 is coaxially fit to the tip of the rotary shaft 29a. These two motors 28, 29 independently rotate the two rotating plates 23, 24 in both directions by desired angles, respectively.

As shown in FIG. 6, the two motors 28, 29 so as to independently rotate the two rotating plates 23, 24 in the desired directions and by desired angles, respectively, are connected to the controller 10 of the flow channel opening and closing device 20. In addition, the controller 10 has an image processor 34 to which a CCD line sensor 32 is connected, an inner pressure sensor 36 which is fit to the negative pressure chamber 5, and a memory 38 to store a control table which will be described later.

The CCD line sensor 32 is fit to the bottom of the insert portion 2 as shown in FIG. 1, and takes an image at approximately the lower end of the postal matter P which is fed to the vicinity of the takeout position S. The image processor 34 sends data obtained by processing the image taken by the CCD line sensor 32 to the controller 10. The controller 10 detects thicknesses of a plurality of postal matters P to be fed toward the take out position S based on the data sent from the image processor 34. That is, the CCD line sensor 32 and the image processor 34 function as a thickness detection unit of the invention.

The inner pressure sensor 36 is externally fixed to the negative pressure chamber 5 as shown in FIG. 4. The inner pressure sensor 36 is provided so as to measure an inner pressure of the negative pressure chamber 5.

In addition, data for the stop position of the rotating plate 24 after the previous postal matter P is taken out is stored in the control table not shown which is stored in the memory 38, with respect to proper rotation direction and rotation angle of the relevant rotating plate 24 at the time of taking out the next postal matter P. The control table is prepared for each thickness (that is, weight) of the postal matter P which is detected by the above-described thickness detecting units 32, 34.

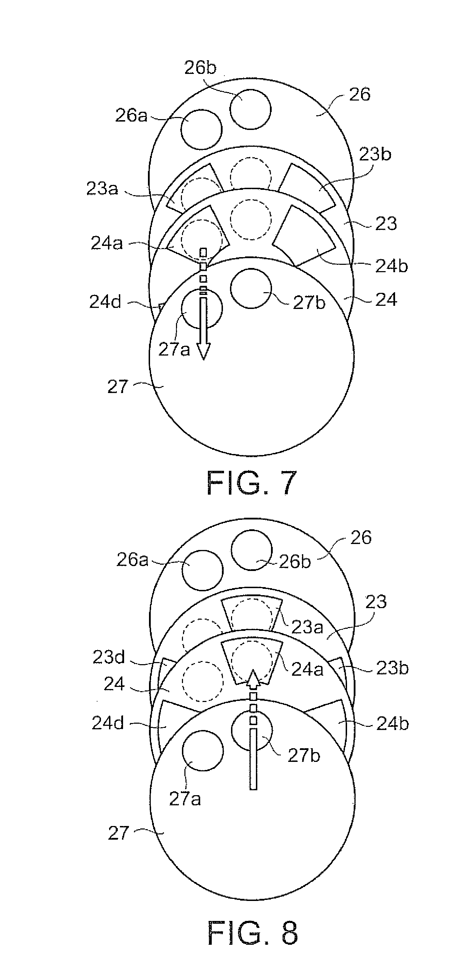

In case that the flow channel of the air flowing through the induction pipe 21 (hereinafter, referred to simply as a flow channel of the induction pipe 21) is fully opened, and the flow channel of the air flowing through the eduction pipe 22 (hereinafter, referred to simply as a flow channel of the eduction pipe 22) is closed by operating the flow channel opening and closing device 20 with the above-described structure, the two rotating plates 23, 24 are rotated to a rotation position shown in FIG. 7, and then are stopped, for example. In this state, the fluid passing hole 23a of the rotating plate 23 overlaps with the flow channel of the induction pipe 21 and in addition, the fluid passing hole 24a of the rotating plate 24 overlaps with the flow channel of the induction pipe 21, and thereby the flow channel of the induction pipe 21 is opened. In addition, in this state, a region except the fluid passing holes of the rotating plate 23 (here, the region between the fluid passing holes 23a and 23b) overlaps with the flow channel of the eduction pipe 22, and in addition, a region except the fluid passing holes of the rotating plate 24 (here, the region between the fluid passing holes 24a and 24b) overlaps with the flow channel of the eduction pipe 22, and thereby the flow channel of the eduction pipe 22 is closed.

On the other hand, in case that the flow channel of the induction pipe 21 is closed and the flow channel of the eduction pipe 22 is fully opened, by operating the flow channel opening and closing device 20, the two rotating plates 23, 24 are rotated to a rotation position shown in FIG. 8 and then are stopped, for example. In this state, the fluid passing hole 23a of the rotating plate 23 overlaps with the flow channel of the eduction pipe 22, and in addition, the fluid passing hole 24a of the rotating plate 24 overlaps with the flow channel of the eduction pipe 22, and thereby the flow channel of the eduction pipe 22 is opened. In addition, in this state, a region except the fluid passing holes of the rotating plate 23 (here, the region between the fluid passing holes 23a and 23d) overlaps with the flow channel of the induction pipe 21, and in addition, a region except the fluid passing holes of the rotating plate 24 (here, the region between the fluid passing holes 24a and 24d) overlaps with the flow channel of the induction pipe 21, and thereby the flow channel of the induction pipe 21 is closed.

That is, in the case of fully opening the flow channel of the induction pipe 21, respective ones of the fluid passing holes of the two rotating plates 23, 24 are required to concurrently overlap with the flow channel of the induction pipe 21, and in order to fully open the flow channel of the eduction pipe 22, respective ones of the fluid passing holes of the two rotating plates 23, 24 are required to concurrently overlap with the flow channel of the eduction pipe 22. In other words, by rotating the two rotating plates 23, 24 to any of the state shown in FIG. 7 and the state shown in FIG. 8 and then stopping, the flow channel of the induction pipe 21 and the flow channel of the eduction pipe 22 can be opened and closed selectively.

In the present embodiment, assuming that the pump 13 is constantly operated to constantly evacuate the negative pressure chamber 5, the flow channel opening and closing device 20 is controlled so that the flow channel of the induction pipe 21 is closed and the flow channel of the eduction pipe 22 is opened at the same time (the state shown in FIG. 8) at the timing when the postal matter P is not adsorbed to the takeout belt 4. By using the flow channel opening and closing device 20 of the present embodiment, as the flow channel of the induction pipe 21 can be closed instantaneously and at the same time a large amount of air can be flown in the negative pressure chamber 5 in the evacuated state by the pump 13 via the eduction pipe 22, the negative pressure chamber 5 can be opened instantaneously to the pressure of atmosphere at a desired timing.

As the negative pressure chamber 5 is constantly evacuated in the present embodiment in this way, in order to resolve the negative pressure in the chamber 5, to feed a large amount of air concurrently into the negative pressure chamber 5 is required. But according to the conventional control method by only making the solenoid valve OFF, as a large amount of air is not to be fed into the chamber 5 concurrently, a time is required till the negative pressure is eliminated.

Consequently, in order to control the gaps between postal matters P to desired values with high accuracy, to feed a large amount of air concurrently into the negative pressure chamber 5 at a desired timing when the postal matter P is not adsorbed is important. In the present embodiment, the flow channel of the eduction pipe 22 can be made so as to have a comparatively large cross section, and as a large amount of air can be fed into the negative pressure chamber 5 instantaneously by only rotating the two rotating plates 23, 24, the negative pressure can be eliminated in an extremely short time.

On the other hand, in order to take out the postal matter P fed to the takeout position S on the surface of the takeout belt 4 which is running in the direction of the arrow T on the conveyor route 9 at a desired timing by making the relevant postal matter P adsorbed to the takeout belt 4, to generate instantaneously an adsorption force having a desired strength on the surface of the takeout belt 4 is required. In this case, the strongest adsorption force can be operated to the postal matter P at the takeout position S, by operating the flow channel opening and closing device 20 in the state shown in FIG. 7. The adsorption force in this time depends on the suction ability of the pump 13.

But in case that the postal matter p which has a relatively small size and is thin and light such as a postcard is taken out by being adsorbed to the takeout belt 4, if the adsorption force which is generated on the surface of the takeout belt 4 is too strong, there becomes a high possibility that the postal matter P to be taken out next is also adsorbed and taken out together, namely so-called double feeding is generated. In fact, to set the adsorption force which makes the postal matter P to be adsorbed to the takeout belt 4 to a proper magnitude according to the size and weight of the relevant postal matter P is desirable.

For this reason, in the present embodiment, the adsorption force for the postal matter has been made to be changed for each postal matter using the above-described flow channel opening and closing device 20. Specifically, the flow rate of the air suctioned via the induction pipe 21 can be controlled by adjusting the overlapping degree of the fluid passing holes formed on the two rotating plates 23, 24 of the flow channel opening and closing device 20 with each flow channel, and thereby the magnitude of the negative pressure generated on the surface of the takeout belt 4 has been made to be controlled.

That is, in case that a postal matter P which has a relatively small size and is thin and light such as a postcard is taken out, the adsorption force has been made to be weakened by reducing the flow rate of the air flowing through the induction pipe 21, and in case that a postal matter P which has a large size larger than A4 size and is relatively thick and heavy, the adsorption force has been made to be strengthened by increasing the flow rate of the air flowing through the induction pipe 21.

Here, to begin with, the fundamental operation of the above-described flow channel opening and closing device 20 will be described by citing several examples.

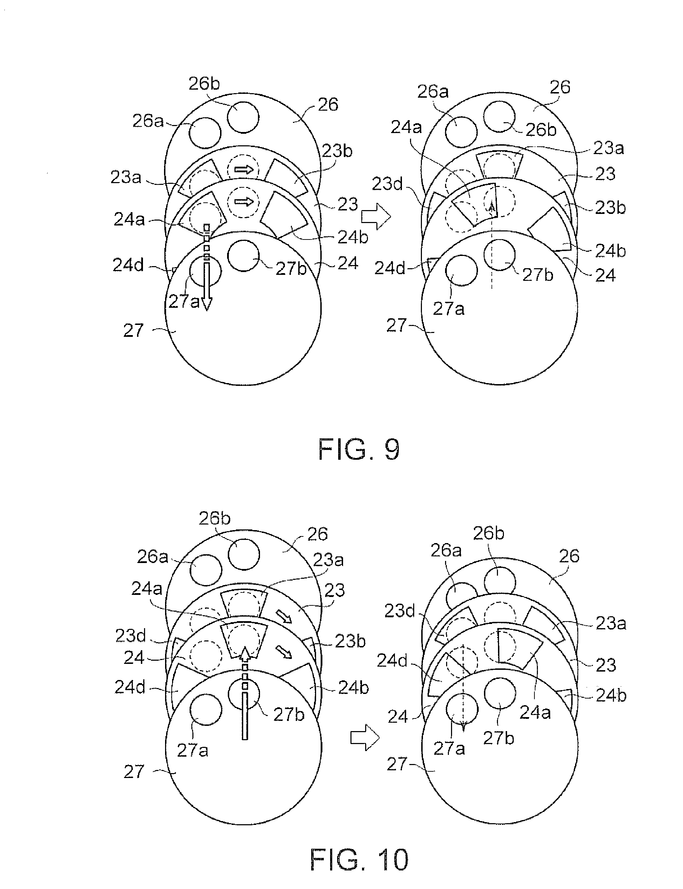

In case that from the state that the flow channel of the induction pipe 21 is fully opened, the flow channel of the induction pipe 21 is closed and in addition the flow channel of the eduction pipe 22 is half opened, for example, the two rotating plates 23, 24 are rotated as shown in FIG. 9 from the left figure to the right figure. Specifically, the one rotating plate 23 is rotated in the clockwise direction in the figure by 45° and is stopped at the position in the right figure, and thereby the fluid passing hole 23a is made to overlap with the flow channel of the eduction pipe 22, and in addition, the flow channel of the induction pipe 21 is closed at the region except the fluid passing holes of the rotating plate 23 (the region between the fluid passing holes 23a, 23d in FIG. 9). At the same time, the other rotating plate 24 is rotated in the clockwise direction (same direction) in the figure by 22.5° and is stopped at the position in the right figure, and thereby the fluid passing hole 24a is made to overlap with the flow channel of the eduction pipe 22 by half.

In addition, in case that from the state that the flow channel of the eduction pipe 22 is fully opened, the flow channel of the eduction pipe 22 is closed and in addition the flow channel of the induction pipe 21 is half opened, the two rotating plates 23, 24 are rotated as shown in FIG. 10 from the left figure to the right figure, for example. Specifically, the one rotating plate 23 is rotated in the clockwise direction in the figure by 45° and is stopped at the position in the right figure, and thereby the fluid passing hole 23d is made to overlap with the flow channel of the induction pipe 21, and in addition, the flow channel of the eduction pipe 22 is closed at the region except the fluid passing holes of the rotating plate 23 (the region between the fluid passing holes 23a, 23d in FIG. 10). At the same time, the other rotating plate 24 is rotated in the clockwise direction (same direction) in the figure by 22.5° and is stopped at the position in the right figure, and thereby the fluid passing hole 24d is made to overlap with the flow channel of the induction pipe 21 by half.

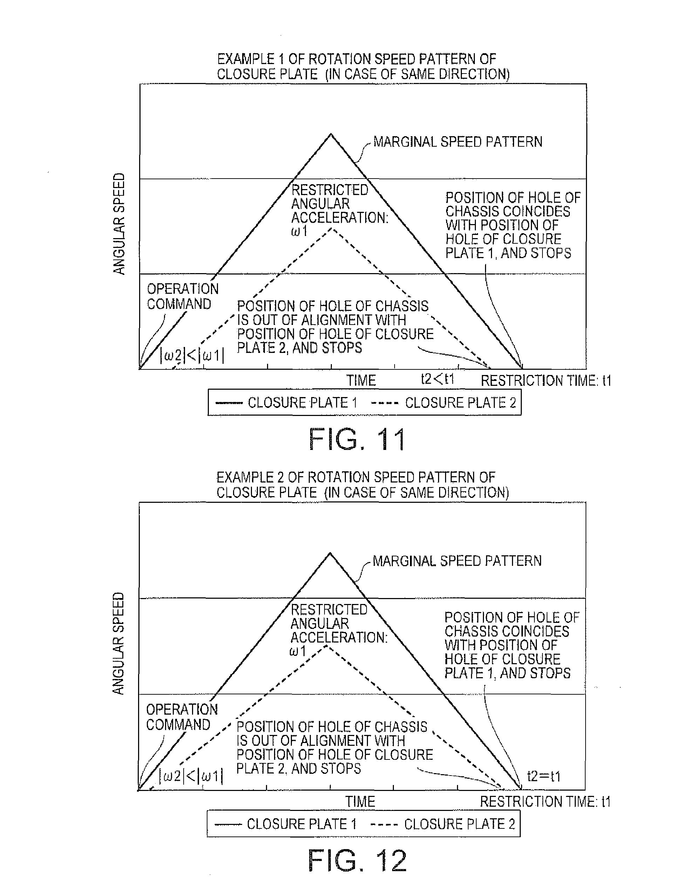

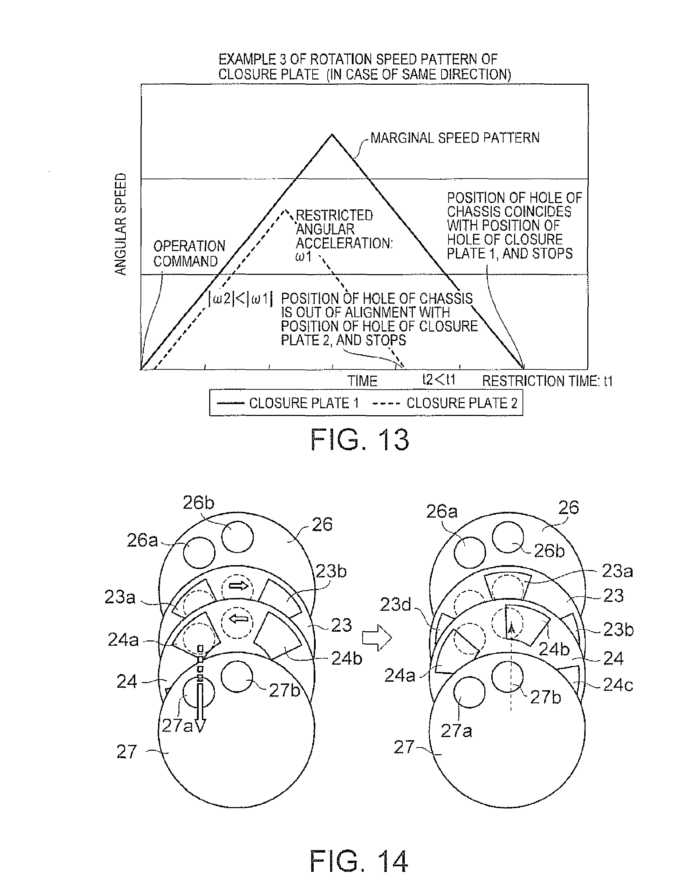

As the patterns of rotation speed in the case of rotating the two rotating plates 23, 24 as described in FIG. 9 and FIG. 10, patterns which are shown in FIG. 11 to FIG. 13 are thought of, for example. In the pattern in FIG. 11, the one rotating plate 23 (shown as a closure plate 1) is accelerated and then decelerated in a restriction time t1 so as to be rotated by 45°, on the other hand, the other rotating plate 24 (shown as a closure plate 2) is accelerated at a time which is a little later than the rotation start of the one rotating plate 23 and then decelerated in a restriction time t2 which is shorter than t1 so as to be rotated by 22.5°. In the pattern in FIG. 12, the one rotating plate 23 is accelerated and decelerated in the time t1 to be rotated by 45°, and the other rotating plate 24 is accelerated and decelerated in the same time t1 to be rotated by 22.5°. In the pattern in FIG. 13, the two rotating plates 23, 24 are accelerated and then decelerated at the same angular acceleration, and the rotating plate 24 whose rotation angle is smaller is stopped in a shorter time t2.

In any cases, in case that the one rotating plate 23 is rotated by 45° and the other rotating plate 24 is rotated in the same direction by 22.5°, the two rotating plates 23, 24 may be rotated in a speed pattern in which an integrated value of the angular speed of the rotating plate 24 during the control time t2 becomes just a half of an integrated value of the angular speed of the rotating plate 23 during the control time t1. In addition, in this time, assuming that the one rotating plate 23 is rotated at the maximum speed of the motor 28, the rotation speed of the other rotating plate 24 never exceeds the limit speed of the motor 29.

In addition, in case that from the state that the flow channel of the induction pipe 21 is fully opened, the flow channel of the eduction pipe 22 is closed and in addition the flow channel of the eduction pipe 22 is half opened, the two rotating plates 23, 24 may be rotated as shown in FIG. 14 from the left figure to the right figure, for example. Specifically, the one rotating plate 23 is rotated in the clockwise direction in the figure by 45° and is stopped at the position in the right figure, and thereby the fluid passing hole 23a is made to overlap with the flow channel of the eduction pipe 22, and in addition, the flow channel of the induction pipe 21 is closed at the region except the fluid passing holes of the rotating plate 23 (the region between the fluid passing holes 23a, 23d in FIG. 14). At the same time, the other rotating plate 24 is rotated in the counterclockwise direction (reverse direction) in the figure by 22.5° and is stopped at the position in the right figure, and thereby the fluid passing hole 24b is made to overlap with the flow channel of the eduction pipe 22 by half.

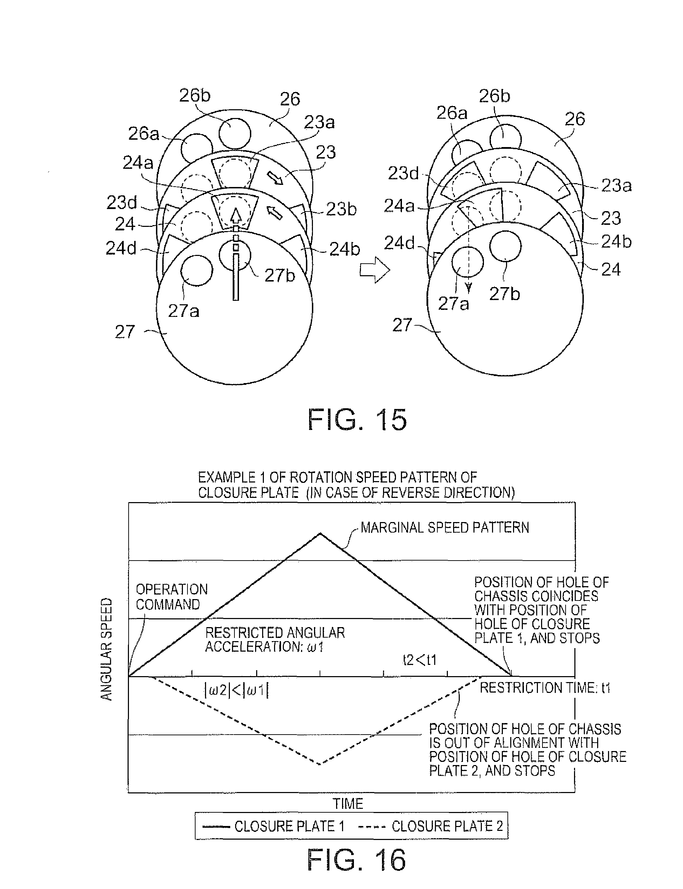

In addition, in case that from the state that the flow channel of the eduction pipe 22 is fully opened, the flow channel of the eduction pipe 22 is closed and in addition the flow channel of the induction pipe 21 is half opened, the two rotating plates 23, 24 may be rotated as shown in FIG. 15 from the left figure to the right figure, foe example. Specifically, the one rotating plate 23 is rotated in the clockwise direction in the figure by 45° and is stopped at the position in the right figure, and thereby the fluid passing hole 23d is made to overlap with the flow channel of the induction pipe 21, and in addition, the flow channel of the eduction pipe 22 is closed at the region except the fluid passing holes of the rotating plate 23 (the region between the fluid passing holes 23a, 23d in FIG. 15). At the same time, the other rotating plate 24 is rotated in the counterclockwise direction (reverse direction) in the figure by 22.5° and is stopped at the position in the right figure, and thereby the fluid passing hole 24a is made to overlap with the flow channel of the induction pipe 21 by half.

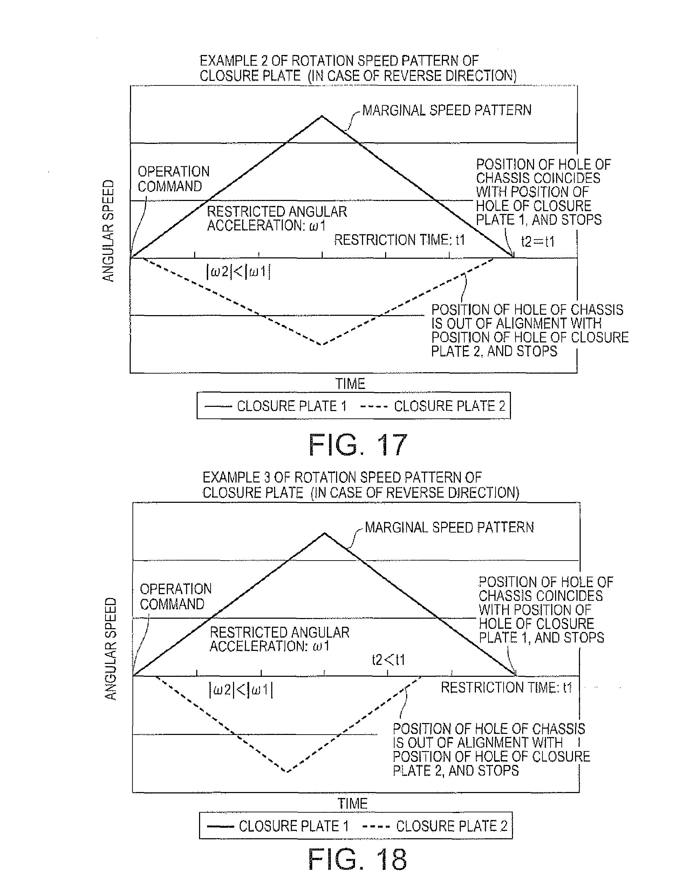

As the patterns of rotation speed in the case of rotating the two rotating plates 23, 24 as described in FIG. 14 and FIG. 15, patterns which are shown in FIG. 16 to FIG. 18 are thought of, for example. In the pattern in FIG. 16, the one rotating plate 23 (shown as the closure plate 1) is accelerated and then decelerated in the restriction time t1 so as to be rotated by 45°, on the other hand, the other rotating plate 24 (shown as the closure plate 2) is accelerated at the time which is a little later than the rotation start of the one rotating plate 23 and then decelerated in the restriction time t2 which is shorter than t1 so as to be rotated by 22.5° in the reverse direction. In the pattern in FIG. 17, the one rotating plate 23 is accelerated and decelerated in the time t1 to be rotated by 45°, and the other rotating plate 24 is accelerated and decelerated in the same time t1 to be rotated by 22.5° in the reverse direction. In the pattern in FIG. 18, the other rotating plate 24 is rotated in the reverse direction at the same angular acceleration as that of the one rotating plate 23, and then is stopped in the time t2 shorter than t1.

In any cases, in case that the one rotating plate 23 is rotated by 45° and the other rotating plate 24 is rotated in the reverse direction by 22.5°, the two rotating plates 23, 24 may be rotated in a speed pattern in which an integrated value of the angular speed of the rotating plate 24 during the control time t2 becomes just a half of an integrated value of the angular speed of the rotating plate 23 during the control time t1. In addition, in this time, assuming that the one rotating plate 23 is rotated at the maximum speed of the motor 28, the rotation speed of the other rotating plate 24 never exceeds the limit speed of the motor 29.

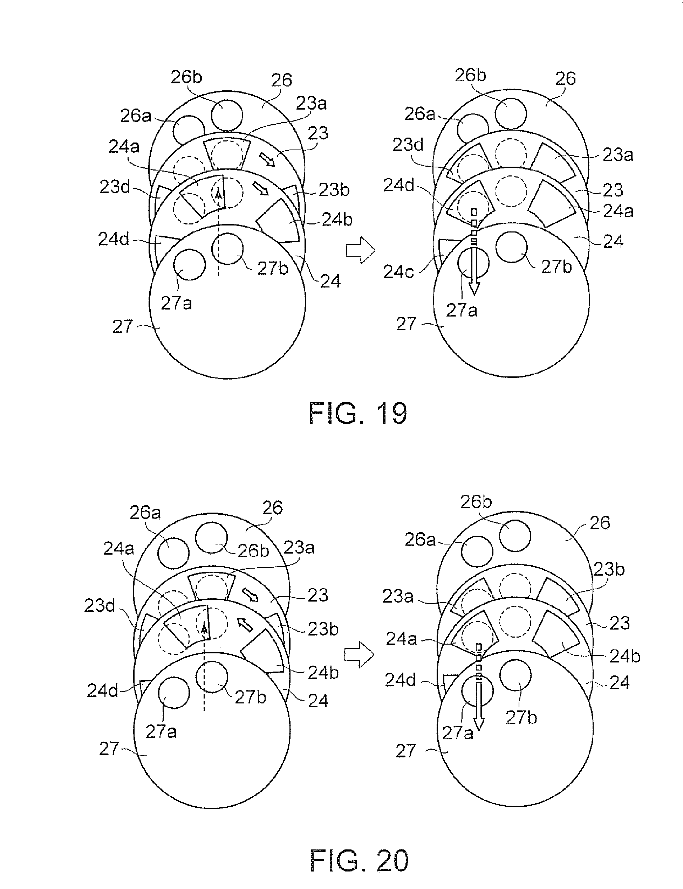

In addition, in case that from the state that the flow channel of the eduction pipe 22 is half opened, the flow channel of the eduction pipe 22 is closed and in addition the flow channel of the induction pipe 21 is fully opened, the two rotating plates 23, 24 are rotated as shown in FIG. 19 from the left figure to the right figure, for example. Specifically, the one rotating plate 23 is rotated in the clockwise direction in the figure by 45° and is stopped at the position in the right figure, and thereby the fluid passing hole 23d is made to overlap with the flow channel of the induction pipe 21, and in addition, the flow channel of the eduction pipe 22 is closed at the region except the fluid passing holes of the rotating plate 23 (the region between the fluid passing holes 23a, 23d in FIG. 19). At the same time, the other rotating plate 24 is rotated in the clockwise direction (same direction) in the figure by 67.5° and is stopped at the position in the right figure, and thereby the fluid passing hole 24d is made to overlap with the flow channel of the induction pipe 21.

In addition, in case that from the state that the flow channel of the eduction pipe 22 is half opened, the flow channel of the eduction pipe 22 is closed and in addition the flow channel of the induction pipe 21 is fully opened, the two rotating plates 23, 24 are rotated as shown in FIG. 20 from the left figure to the right figure. Specifically, the one rotating plate 23 is rotated in the clockwise direction in the figure by 45° and is stopped at the position in the right figure, and thereby the fluid passing hole 23d is made to overlap with the flow channel of the induction pipe 21, and in addition, the flow channel of the eduction pipe 22 is closed at the region except the fluid passing holes of the rotating plate 23 (the region between the fluid passing holes 23a, 23d in FIG. 20). At the same time, the other rotating plate 24 is rotated in the counterclockwise direction (reverse direction) in the figure by 22.5° and is stopped at the position in the right figure, and thereby the fluid passing hole 24a is made to overlap with the flow channel of the induction pipe 21.

Compared the operation described in FIG. 19 with the operation described in FIG. 20, that the other rotating plate 24 is rotated by 67.5° in the former, on the other hand, the other rotating plate 24 is rotated by 22.5° in the reverse direction in the latter is found. That is, in order to switch the flow channel opening and closing device 20 at high speed, the operation of FIG. 20 becomes advantageous in which the rotation angle of the other rotating plate 24 is small. In other words, in case that the other rotating plate 24 is rotated during the time t1 in the direction described in FIG. 19, to rotate the other rotating plate 24 at higher speed than that of the one rotating plate 23 is required, and thereby the limit of the ability of the motor 29 may be caused to run out.

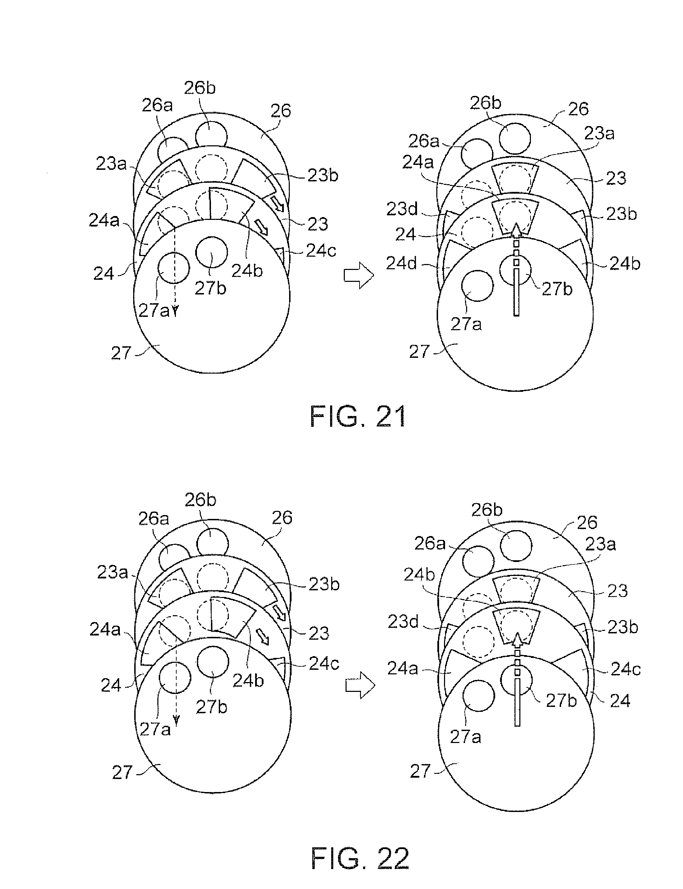

In addition, in case that from the state that the flow channel of the induction pipe 21 is half opened, the flow channel of the eduction pipe 22 is closed and in addition the flow channel of the eduction pipe 22 is fully opened, the two rotating plates 23, 24 are rotated as shown in FIG. 21 from the left figure to the right figure, for example. Specifically, the one rotating plate 23 is rotated in the clockwise direction in the figure by 45° and is stopped at the position in the right figure, and thereby the fluid passing hole 23a is made to overlap with the flow channel of the eduction pipe 22, and in addition, the flow channel of the induction pipe 21 is closed at the region except the fluid passing holes of the rotating plate 23 (the region between the fluid passing holes 23a, 23d in FIG. 21). At the same time, the other rotating plate 24 is rotated in the clockwise direction (same direction) in the figure by 67.5° and is stopped at the position in the right figure, and thereby the fluid passing hole 24a is made to overlap with the flow channel of the eduction pipe 22.

In addition, in case that from the state that the flow channel of the induction pipe 21 is half opened, the flow channel of the eduction pipe 22 is closed and in addition the flow channel of the eduction pipe 22 is fully opened, the two rotating plates 23, 24 are rotated as shown in FIG. 22 from the left figure to the right figure, for example. Specifically, the one rotating plate 23 is rotated in the clockwise direction in the figure by 45° and is stopped at the position in the right figure, and thereby the fluid passing hole 23a is made to overlap with the flow channel of the eduction pipe 22, and in addition, the flow channel of the induction pipe 21 is closed at the region except the fluid passing holes of the rotating plate 23 (the region between the fluid passing holes 23a, 23d in FIG. 22). At the same time, the other rotating plate 24 is rotated in the counterclockwise direction (reverse direction) in the figure by 22.5° and is stopped at the position in the right figure, and thereby the fluid passing hole 24b is made to overlap with the flow channel of the eduction pipe 22.

Compared the operation described in FIG. 21 with the operation described in FIG. 22, that the other rotating plate 24 is rotated by 67.5° in the former, on the other hand, the other rotating plate 24 is rotated by 22.5° in the reverse direction in the latter is found. That is, in order to switch the flow channel opening and closing device 20 at high speed, the operation of FIG. 22 becomes advantageous in which the rotation angle of the other rotating plate 24 is small. In other words, in case that the other rotating plate 24 is rotated during the time t1 in the direction described in FIG. 21, to rotate the other rotating plate 24 at higher speed than that of the one rotating plate 23 is required, and thereby the limit of the ability of the motor 29 may be caused to run out.

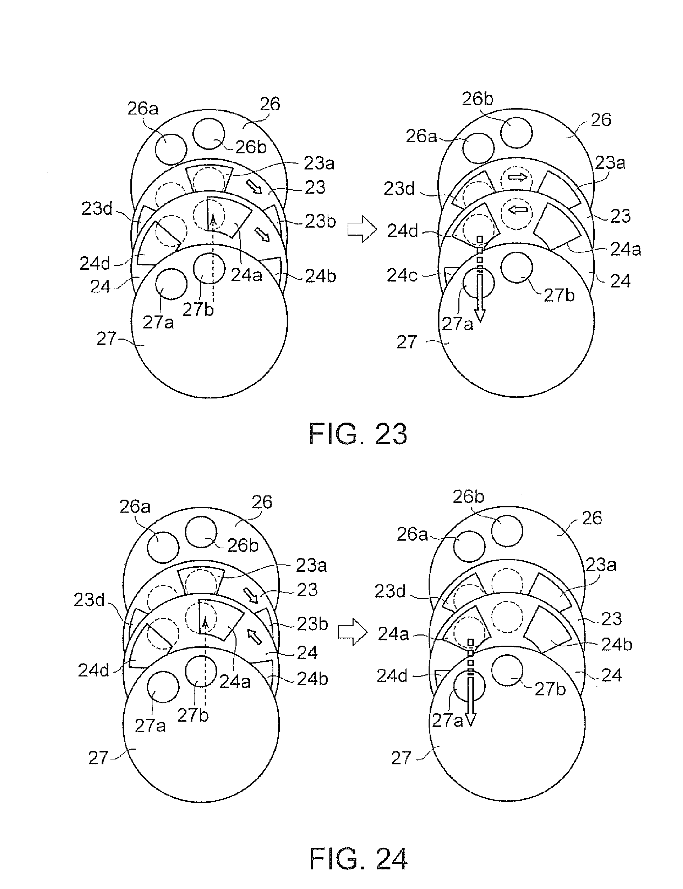

In addition, in case that from the state that the flow channel of the eduction pipe 22 is half opened, the flow channel of the eduction pipe 22 is closed and in addition the flow channel of the induction pipe 21 is fully opened, the two rotating plates 23, 24 are rotated as shown in FIG. 23 from the left figure to the right figure, for example. Specifically, the one rotating plate 23 is rotated in the clockwise direction in the figure by 45° and is stopped at the position in the right figure, and thereby the fluid passing hole 23d is made to overlap with the flow channel of the induction pipe 21, and in addition, the flow channel of the eduction pipe 22 is closed at the region except the fluid passing holes of the rotating plate 23 (the region between the fluid passing holes 23a, 23d in FIG. 23). At the same time, the other rotating plate 24 is rotated in the clockwise direction (same direction) in the figure by 22.5° and is stopped at the position in the right figure, and thereby the fluid passing hole 24d is made to overlap with the flow channel of the induction pipe 21.

In addition, in case that from the state that the flow channel of the eduction pipe 22 is half opened, the flow channel of the eduction pipe 22 is closed and in addition the flow channel of the induction pipe 21 is fully opened, the two rotating plates 23, 24 are rotated as shown in FIG. 24 from the left figure to the right figure, for example. Specifically, the one rotating plate 23 is rotated in the clockwise direction in the figure by 45° and is stopped at the position in the right figure, and thereby the fluid passing hole 23d is made to overlap with the flow channel of the induction pipe 21, and in addition, the flow channel of the eduction pipe 22 is closed at the region except the fluid passing holes of the rotating plate 23 (the region between the fluid passing holes 23a, 23d in FIG. 24). At the same time, the other rotating plate 24 is rotated in the counterclockwise direction (reverse direction) in the figure by 67.5° and is stopped at the position in the right figure, and thereby the fluid passing hole 24a is made to overlap with the flow channel of the induction pipe 21.

Compared the operation described in FIG. 23 with the operation described in FIG. 24, that the other rotating plate 24 is rotated by 22.5° in the former, on the other hand, the other rotating plate 24 is rotated by 67.5° in the reverse direction in the latter is found. That is, in order to switch the flow channel opening and closing device 20 at high speed, the operation of FIG. 23 becomes advantageous in which the rotation angle of the other rotating plate 24 is small. In other words, in case that the other rotating plate 24 is rotated during the time t1 in the direction described in FIG. 24, to rotate the other rotating plate 24 at higher speed than that of the one rotating plate 23 is required, and thereby the limit of the ability of the motor 29 may be caused to run out.

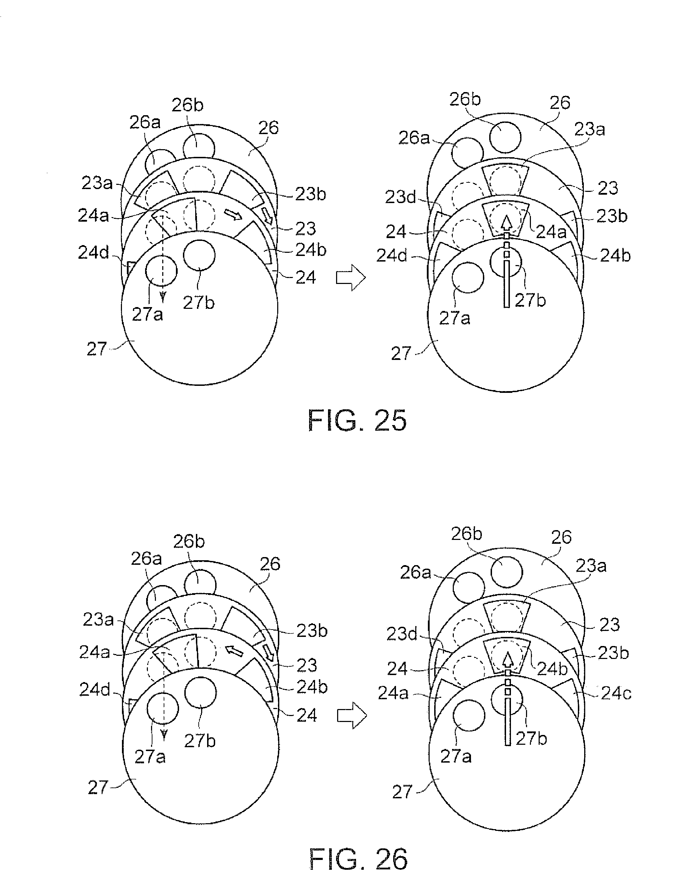

In addition, in case that from the state that the flow channel of the induction pipe 21 is half opened, the flow channel of the eduction pipe 22 is closed and in addition the flow channel of the eduction pipe 22 is fully opened, the two rotating plates 23, 24 are rotated as shown in FIG. 25 from the left figure to the right figure, for example. Specifically, the one rotating plate 23 is rotated in the clockwise direction in the figure by 45° and is stopped at the position in the right figure, and thereby the fluid passing hole 23a is made to overlap with the flow channel of the eduction pipe 22, and in addition, the flow channel of the induction pipe 21 is closed at the region except the fluid passing holes of the rotating plate 23 (the region between the fluid passing holes 23a, 23d in FIG. 25). At the same time, the other rotating plate 24 is rotated in the clockwise direction (same direction) in the figure by 22.5° and is stopped at the position in the right figure, and thereby the fluid passing hole 24a is made to overlap with the flow channel of the eduction pipe 22.

In addition, in case that from the state that the flow channel of the induction pipe 21 is half opened, the flow channel of the eduction pipe 22 is closed and in addition the flow channel of the eduction pipe 22 is fully opened, the two rotating plates 23, 24 are rotated as shown in FIG. 26 from the left figure to the right figure, for example. Specifically, the one rotating plate 23 is rotated in the clockwise direction in the figure by 45° and is stopped at the position in the right figure, and thereby the fluid passing hole 23a is made to overlap with the flow channel of the eduction pipe 22, and in addition, the flow channel of the induction pipe 21 is closed at the region except the fluid passing holes of the rotating plate 23 (the region between the fluid passing holes 23a, 23d in FIG. 26). At the same time, the other rotating plate 24 is rotated in the counterclockwise direction (reverse direction) in the figure by 67.5° and is stopped at the position in the right figure, and thereby the fluid passing hole 24b is made to overlap with the flow channel of the eduction pipe 22.

Compared the operation described in FIG. 25 with the operation described in FIG. 26, that the other rotating plate 24 is rotated by 22.5° in the former, on the other hand, the other rotating plate 24 is rotated by 67.5° in the reverse direction in the latter is found. That is, in order to switch the flow channel opening and closing device 20 at high speed, the operation of FIG. 25 becomes advantageous in which the rotation angle of the other rotating plate 24 is small. In other words, in case that the other rotating plate 24 is rotated during the time t1 in the direction described in FIG. 26, to rotate the other rotating plate 24 at higher speed than that of the one rotating plate 23 is required, and thereby the limit of the ability of the motor 29 may be caused to run out.

In the light of the fundamental operation of the flow channel opening and closing device 20 as described above, an operation of the flow channel opening and closing device 20 at the time of actually taking out the postal matters P will be described. When the takeout apparatus 1 is operated and taking out the postal matters P is started, the controller 10 takes an image of the approximately lower ends of a plurality of the postal matters P which are fed in the vicinity of the takeout position S via the CCD line sensor 32 which is arranged at the bottom of the insert portion 2, processes the image in the image processor 34, and detects the thickness of the postal matter P to be taken out next. Here, that the weight of the postal matter P is approximately proportional to the thickness of the postal matter P is thought.

And, the controller 10 reads out the relevant control table form the memory 38, based on the thickness (weight) of the postal matter P to be taken out next at the takeout position S which is detected via the CCD line sensor 32, and rotates the rotating plate 24 in the proper rotation direction and by the proper rotation angle which are present in the control table, in time with the timing of taking out the relevant postal matter P. In this time, as the one rotating plate 23 only opens and closes the flow channel of the induction pipe 21 and the flow channel of the eduction pipe 22 alternately as described in the above-described fundamental operation, and does not relate to the flow rate of the air flowing through the induction pipe 21, the description of the operation of the rotating plate 23 will be omitted here.

A plurality of the control tables are prepared for the thicknesses of the respective postal matters P to be taken out next. In each of the control tables, data is stored with respect to proper rotation direction and proper rotation angle (rotation amount) of the relevant rotating plate 24 at the time of taking out the next postal matter P, for the stop position of the rotating plate 24 after the previous postal matter P is taken out.

"The stop position of the rotating plate 24 after the previous postal matter P is taken out" stated here is practically a position to make the flow channel of the eduction pipe 22 fully open regardless of the thickness of the previous postal matter P. That is, in order to instantaneously eliminate the negative pressure generating on the surface of the takeout belt 4 after taking out the postal matter P, as fully opening the flow channel of the eduction pipe 22 is advantageous, the stop position of the rotating plate 24 after taking out each postal matter P becomes a position where any of the fluid passing holes 24a, 24b, 24c, 24d overlaps with the flow channel of the eduction pipe 22.

Consequently, the controller 10 usually comes to control the rotation direction and the rotation angle of the rotating plate 24 according to the weight of the postal matter P to be taken out next, regardless of the thickness of the previous postal matter P. In case that the postal matter P to be taken out next is a matter which is relatively heavy and exceeds A4 size, such as a sealed matter, the controller 10 comes to rotate the rotating plate 24 from a position to fully open the flow channel of the eduction pipe 22 (the position shown in FIG. 8, for example) to a position to fully open the flow channel of the induction pipe 21 (the position shown in FIG. 7, for example). In this case, the rotation direction of the rotating plate 24 may be either direction.

In addition, in case that the postal matter P to be taken out next is a relatively light matter, such as a postcard, the controller 10 comes to rotate the rotating plate 24 from a position to fully open the flow channel of the eduction pipe 22 to a position to half open the flow channel of the induction pipe 21. In this case too, the rotation direction of the rotating plate 24 may be either direction. That is, in the case in which the rotating plate 24 and the rotating plate 23 are rotated in the same direction as described in FIG. 10, and in the case in which the rotating plate 24 and the rotating plate 23 are rotated in the opposite directions as described in FIG. 15, the rotation amounts of the rotating plate 24 are the same in the two cases, the rotation can be finished within the same time period, even if the rotating plate 24 is rotated in either direction.

In addition, in case that the postal matter P to be taken out next is heavier than a postcard and lighter than a sealed matter of A4 size, such as "long shape No. 4" (205 mm long x 90 mm wide), the controller 10 comes to rotate the rotating plate 24 from a position to fully open the flow channel of the eduction pipe 22 to a position to open the flow channel of the induction pipe 21 by 3/4. In this case too, the rotation direction of the rotating plate 24 may be either direction.

That is, in the case of making the fluid passing hole 24d overlap with the flow channel of the induction pipe 21 by 3/4, by rotating the rotating plate 24 in the clockwise direction in the figure from the state in which the fluid passing hole 24a of the rotating plate 24 overlapped with the flow channel of the eduction pipe 24 as shown in the left side of FIG. 10, here the fluid passing hole 24d locating at the next upstream side along the rotation direction of the rotating plate 24 from the fluid passing hole 24a which overlapped with the flow channel of the eduction pipe 22, to rotate the rotating plate 24 from the state (half open) in the right side of FIG. 10 by a rotation amount which is a prescribed amount larger is required.

On the other hand, in the case of making the fluid passing hole 24a which overlapped with the flow channel of the eduction pipe 22 overlap with the flow channel of the induction pipe 21 by 3/4, by rotating the rotating plate 24 in the counterclockwise direction in the figure from the state in the left side of FIG. 15, for example, the rotating plate 24 is to be rotated from the state (half open) in the right side of FIG. 15 by the rotation amount which is larger by the same amount. That is, in this case, the proper rotation direction of the rotating plate 24 may be either direction, and the proper rotation amount becomes a rotation amount which is larger than 22.5° by a prescribed amount.

But, in case that "the stop position of the rotating plate 24 after the previous postal matter P is taken out" is not one of the positions where any of the fluid passing holes 24a, 24b, 24c, 24d overlaps with the flow channel of the eduction pipe 22 so as to fully open as describe above, the controller 10 is required to rotate the rotating plate 24 in the proper rotation direction and by the proper rotation angle for the stop position which are stored in the read out control table.

In the case of taking out the relatively heavy postal matter P with a size exceeding A4, after the relevant postal matter P is adsorbed to the takeout belt 4 with the maximum adsorption force and is taken out, as the relevant postal matter P is separated from the takeout belt 4 by an inertial force of the postal matter P itself, to completely eliminate the adsorption force by the takeout belt 4 after taking out is not necessary. In addition, in case that the postal matter P to be taken out next at the takeout position S is the postal matter P which is relatively heavy, even if a slight negative pressure remains on the surface of the belt, the relevant postal matter P will not be adsorbed to the belt and taken out, there is no problem even if negative pressure remains on the surface of the takeout belt 4.

In such a case like this, preferably after the postal matter P is taken out, adsorption force enough to make the postal matter P to be taken out next to be adsorbed to the takeout belt 4 can be generated faster by not completely eliminating the negative pressure on the surface of the takeout belt 4, and thereby the power consumption of the pump 13 can also be suppressed.

Specifically, in the case of fully opening the flow channel of the induction pipe 21 as shown in the right side figure of FIG. 19, by rotating the rotating plate 24 in the clockwise direction in the figure from the state in which the flow channel of the eduction pipe 22 is half opened as shown in the left figure of FIG. 19, for example, the fluid passing hole 24d locating at the next downstream side along the rotation direction of the rotating plate 24 from the fluid passing hole 24a which overlapped with the flow channel of the eduction pipe 22 by half is made to overlap with the flow channel of the induction pipe 21. In this case, the rotation direction of the rotating plate 24 is the clockwise direction, and the rotation angle of the rotating plate 24 becomes 67.5°.

Similarly, in the case of fully opening the induction pipe 21 from the state in which the flow channel of the eduction pipe 22 is half opened, the fluid passing hole 24a may be made to overlap with the flow channel of the induction pipe 21 as shown in the right side figure of FIG. 20, by rotating the rotating plate 24 in the counterclockwise direction in the figure (reverse direction) from the state in which the relevant fluid passing hole 24a which overlapped with the flow channel of the eduction pipe 24 by half as shown in the left figure of FIG. 20, for example. In this case, the rotation direction of the rotating plate 24 is the counterclockwise direction, and the rotation angle of the rotating plate 24 is 22.5°.

In addition, similarly, in the case of fully opening the induction pipe 21 from the state in which the flow channel of the eduction pipe 22 is half opened, the fluid passing hole 24d at the next upstream side may be made to overlap with the flow channel of the induction pipe 21 as shown in the right side figure of FIG. 23, by rotating the rotating plate 24 in the clockwise direction from the state in which the fluid passing hole 24a which overlapped with the flow channel of the eduction pipe 24 by half as shown in the left figure of FIG. 23, for example. In this case, the rotation direction of the rotating plate 24 is the clockwise direction, and the rotation angle of the rotating plate 24 is 22.5°.

In addition, similarly, in the case of fully opening the induction pipe 21 from the state in which the flow channel of the eduction pipe 22 is half opened, the fluid passing hole 24a may be made to overlap with the flow channel of the induction pipe 21 as shown in the right side figure of FIG. 24, by rotating the rotating plate 24 in the counterclockwise direction in the figure (reverse direction) from the state in which the relevant fluid passing hole 24a which overlapped with the flow channel of the eduction pipe 24 by half as shown in the left figure of FIG. 24, for example. In this case, the rotation direction of the rotating plate 24 is the counterclockwise direction, and the rotation angle of the rotating plate 24 is 67.5°.

That is, in the case of fully opening the induction pipe 21 from the state in which the flow channel of the eduction pipe 22 is half opened, at least the four methods as described above are thought of, but the proper rotation direction and the rotation angle of the rotating plate 24 in these cases are the rotation direction and the rotation angle shown in FIG. 20 and FIG. 23 in which the rotation amount of the rotating plate 24 becomes minimum. Consequently, the proper rotation direction and the rotation angle come to be recorded in the control table.

In addition to these cases, various cases to take out postal matters P are thought of, such as a case in which the flow channel of the induction pipe 21 is half opened so as to take out the next postal matter P (postcard, for example) from the state in which the flow channel of the eduction pipe 22 is opened by 1/3, and a case in which the flow channel of the induction pipe 21 is opened by 3/4 so as to take out the next postal matter P (long shape No. 4, for example) from the state in which the flow channel of the eduction pipe 22 is opened by 1/4. But, in any cases, as the proper rotation direction and the proper rotation angle of the rotating plate 24 are decided based on the weight of the postal matter P to be taken out next and the stop position of the rotating plate 24 after taking out the previous postal matter P, so that the rotation amount of the rotating plate 24 becomes minimum, the proper rotation direction and the rotation angle may be recorded in the control table for the weight of the postal matter P to be taken out next.

As described above, according to the flow channel opening and closing device 20 of the present embodiment, the one rotating plate 23 is rotated so that the flow channel of the induction pipe 21 and the flow channel of the eduction pipe 22 are opened and closed alternately, and at the same time the rotation amount of the other rotating plate 24 is regulated, and thereby the flow rate of the air flowing through the opened flow channel is controlled by controlling the overlapping degree of the fluid passing holes of the rotating plate 24 for the flow channels, accordingly the flow rate of the air when the flow channel is opened can also be controlled to a desired amount surely and instantaneously.

Consequently, when the flow channel opening and closing device 20 is applied to the takeout apparatus 1 for the postal matter P as described above, the adsorption force of the relevant postal matter P to the takeout belt 4 can be changed to a proper value in accordance with the weight of the postal matter P to be taken out next from the takeout position S, and thereby all the postal matters P can be taken out stably at the desired timing. In addition, therefore the double feed of the postal matters P can be prevented and the takeout gap can be stabilized.

In addition, this invention is not limited to the above-described embodiments without modification, but can be embodied in the embodying stage without departing from the spirit of the invention by modifying the constituent elements. In addition, various inventions can be formed by arbitrarily combining a plurality of the constituent elements which are disclosed in the above-described embodiments. Some constituent elements may be deleted from the whole constituent elements which are disclosed in the embodiments, for example. In addition, the constituent elements throughout the different embodiments may be arbitrarily combined.

The case was described, for example, in which the thickness of the postal matter P is detected based on the image of the postal matter P which is taken using the CCD line sensor 32 arranged at the bottom of the insert portion 2, in the above-described embodiments, but without being limited to this case, a camera is arranged to take an image of the surface of the postal matter P which is fed to the takeout position S, and the weight may be detected from the size of the postal matter P. Or, the weight of the postal matter P which is fed to the takeout position S may be directly measured.

In addition, in place of detecting the weight of the postal matter P, the adsorption state of the postal matter P to the takeout belt 4 may be detected by measuring the pressure inside the negative pressure chamber 5 using the inner pressure sensor 36 shown in FIG. 4 and FIG. 6. In this case, the controller 10 monitors the pressure detected via the inner pressure sensor 36, and controls the rotation amount of the rotating plate 24 of the flow channel opening and closing device 20, and thereby all the postal matters P can be adsorbed with a proper adsorption force to the takeout belt 4 and then can be taken out.

In addition, the flow channel opening and closing device 20 using two rotating plates 23, 24 was described in the above-described embodiments, but without being limited to this, a drum type flow channel opening and closing device may be used in which two cylindrical rotating bodies with different diameters are overlapped coaxially and a negative pressure chamber is arranged inside thereof. In this case, an opening facing the takeout position S is provided at the circumference wall of the cylindrical negative pressure chamber, and air is to be suctioned through fluid passing holes formed on the two rotating bodies which rotate along the circumference wall.

In addition, the one rotating plate 23 out of the two rotating plates 23, 24 was rotated by 90° each time to open and close the two flow channels alternately, and the rotation amount of the other rotating plate 24 was regulated to control the circulation amount of the air, in the above-described embodiment, but without being limited to this, the flow channels may be opened and closed by the other rotating plate 24 and the flow rate may be controlled by the one rotating plate 23.

The flow channel opening and closing device of the invention can be applied to a postal matter takeout apparatus which makes a plurality of postal matters with different sizes and weights to be adsorbed one by one to the takeout belt for taking out.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A flow channel opening and closing device, comprising:
a first rotating plate (23) provided rotatably along a face which crosses two adjacent flow channels, having a first fluid passing hole (23a) which overlaps with each of the two flow channels midway during rotation, which fully opens the one flow channel and blocks the other flow channel at a region except the first fluid passing hole (23a) by making the first fluid passing hole (23a) overlap with the one flow channel; and
a second rotating plate (24) provided adjacent to the first rotating plate (23) and rotatably along a face which crosses the two flow channels, having a second fluid passing hole (24a) which overlaps with each of the two flow channels midway during rotation, which rotates to a position where the second fluid passing hole (24a) overlaps at least partially with the one flow channel when the first rotating plate (23) rotates to a position where the first fluid passing hole (23a) fully opens the one flow channel.

2. The device of Claim 1, wherein:
the two flow channels are an induction pipe (21) and an eduction pipe (22).

3. The device of Claim 1 or 2, further comprising:
a controller (10) to control a flow rate of fluid flowing through the one flow channel by controlling a rotation amount of the second rotating plate (24) so as to control overlapping degree of the second fluid passing hole (24a) with the one flow channel.

4. The device of Claim 3, wherein:
the second rotating plate (24) has a plurality of the second fluid passing holes (24a, 24b, 24c, 24d) which are arranged separately along the rotation direction; and
the controller (10) rotates the first rotating plate (23) to a position where the other flow channel is fully opened by making the first fluid passing hole (23a) overlap with the other flow channel when the one flow channel is closed and the other flow channel is opened from a state in which the one flow channel is opened, and in addition, rotates the second rotating plate (24) in a direction to make a third fluid passing hole (24b) overlap with the other flow channel, the third fluid passing hole (24b) being able to rotate to a position to open the other flow channel with a minimum rotation amount out of the plurality of second fluid passing holes (24a, 24b, 24c, 24d).

5. The device of Claim 4, wherein:
the controller (10) decides the third fluid passing hole (24b) with the minimum rotation amount, based on overlapping degree of the second fluid passing hole (24a) with the one flow channel in a state in which the one flow channel is opened, and overlapping degree of the second fluid passing hole (24a) with the other flow channel in a state in which the one flow channel is closed and the other flow channel is opened, and in addition, rotates the second rotating plate (24) in a direction to make the third fluid passing hole (24b) overlap with the other flow channel.

6. A sheet handling apparatus, comprising:
an insert portion (2) to insert a plurality of sheets (P) in stacked state;
a takeout member (4) with adsorption holes (4a) which runs along the sheet (P) at an end in a stacking direction out of the sheets (P) inserted in the insert portion (2);
a negative pressure generating portion (5) to generate negative pressure at a surface side of the takeout member (4) via the adsorption holes (4a) from a back side of the takeout member (4), so as to make the sheet (P) at the end to be adsorbed to the surface of the takeout member (4);
an air-intake device (13) connected to the negative pressure generating portion (5) via an induction pipe (21) and an eduction pipe (22); and
a flow channel opening and closing device (20) of any of Claims 1∼5 provided midway between the induction pipe (21) and the eduction pipe (22).

7. The apparatus of Claim 6, further comprising:
a controller (10) to control a flow rate of fluid flowing through the one flow channel by controlling a rotation amount of the second rotating plate (24) so as to control overlapping degree of the second fluid passing hole (24a) with the one flow channel.

8. The apparatus of Claim 7, wherein:
the second rotating plate (24) has a plurality of the second fluid passing holes (24a, 24b, 24c, 24d) which are arranged separately along the rotation direction; and
the controller (10) rotates the first rotating plate (23) to a position where the other flow channel is fully opened by making the first fluid passing hole (23a) overlap with the other flow channel when the one flow channel is closed and the other flow channel is opened from a state in which the one flow channel is opened, and in addition, rotates the second rotating plate (24) in a direction to make a third fluid passing hole (24b) overlap with the other flow channel, the third fluid passing hole (24b) being able to rotate to a position to open the other flow channel with a minimum rotation amount out of the plurality of second fluid passing holes (24a, 24b, 24c, 24d).

9. The apparatus of Claim 8, wherein:
the controller (10) decides the third fluid passing hole (24b) with the minimum rotation amount, based on overlapping degree of the second fluid passing hole (24a) with the one flow channel in a state in which the one flow channel is opened, and overlapping degree of the second fluid passing hole (24a) with the other flow channel in a state in which the one flow channel is closed and the other flow channel is opened, and in addition, rotates the second rotating plate (24) in a direction to make the third fluid passing hole (24b) overlap with the other flow channel.

10. The apparatus of Claim 7, further comprising:
an inner pressure sensor (36) so as to measure an inner pressure of the negative pressure generating portion (5),
wherein the controller (10) controls overlapping degree of the second fluid passing hole (24a) with the one flow channel by controlling a rotation amount of the second rotating plate (24) based on a measurement result of the inner pressure sensor (36).

11. The apparatus of Claim 7, further comprising:
a thickness detecting unit (32, 34) to detect thickness of the sheet (P) at the end in the stacked direction out of the sheets (P) inserted in the insert portion (2),
wherein the controller (10) controls overlapping degree of the second fluid passing hole (24a) with the one flow channel by controlling a rotation amount of the second rotating plate (24) based on a measurement result of the thickness detecting unit (32, 34).

12. A flow channel opening and closing device, comprising:
a first rotating plate (23) provided rotatably in the direction to cross a flow channel, having a first fluid passing hole (23a) which overlaps with the flow channel midway during rotation, which fully opens the flow channel by making the first fluid passing hole (23a) overlap with the flow channel; and
a second rotating plate (24) provided adjacent to the first rotating plate (23) and rotatably in the direction to cross the flow channel, having a second fluid passing hole (24a) which overlaps with the flow channel midway during rotation, which rotates to a position where the second fluid passing hole (24a) overlaps at least partially with the flow channel when the first rotating plate (23) rotates to a position where the first fluid passing hole (23a) fully opens the flow channel.

13. The device of Claim 12, wherein:
the flow channel is an induction pipe (21).

14. The device of Claim 12 or 13, further comprising:
a controller (10) to control a flow rate of fluid flowing through the flow channel by controlling a rotation amount of the second rotating plate (24) so as to control overlapping degree of the second fluid passing hole (24a) with the flow channel.

15. A sheet handling apparatus, comprising:
an insert portion (2) to insert a plurality of sheets (P) in stacked state;
a takeout member (4) with adsorption holes (4a) which runs along the sheet (P) at an end in a stacking direction out of the sheets (P) inserted in the insert portion(2) ;
a negative pressure generating portion (5) to generate negative pressure at a surface side of the takeout member (4) via the adsorption holes (4a) from a back side of the takeout member (4), so as to make the sheet (P) at the end to be adsorbed to the surface of the takeout member (4);
an air-intake device (13) connected to the negative pressure generating portion (5) via an induction pipe (21); and
a flow channel opening and closing device (20) of any of Claims 12 - 14 provided midway the induction pipe (21).
